(19) **Europäisches Patentamt**

**European Patent Office**

**Office européen des brevets**

(11) Veröffentlichungsnummer: **0 330 757 B1**

(12) # EUROPÄISCHE PATENTSCHRIFT

(45) Veröffentlichungstag der Patentschrift: **15.07.92**

(21) Anmeldenummer: **88121295.5**

(22) Anmeldetag: **20.12.88**

(51) Int. Cl.⁵: **C10G 1/00**, C10G 47/00

(54) **Verfahren zur Aufarbeitung von Abfallstoffen u. dgl. durch Schwelung und anschliessende Weiterverarbeitung des Schwelöls.**

(30) Priorität: **27.02.88 DE 3806365**

(43) Veröffentlichungstag der Anmeldung:
**06.09.89 Patentblatt 89/36**

(45) Bekanntmachung des Hinweises auf die
Patenterteilung:
**15.07.92 Patentblatt 92/29**

(84) Benannte Vertragsstaaten:
**AT BE CH DE ES FR GB GR IT LI LU NL SE**

(56) Entgegenhaltungen:
**EP-A- 0 096 382       EP-A- 0 111 081
EP-A- 0 263 522       US-A- 2 939 835
US-A- 3 503 867       US-A- 4 204 943**

(73) Patentinhaber: **VEBA OEL Technologie GmbH
Alexander-von-Humboldt-Strasse
W-4650 Gelsenkirchen 2(DE)**

(72) Erfinder: **Merz, Ludwig, Dr.
Klausener Strasse 18
W-4350 Recklinghausen(DE)**
Erfinder: **Niemann, Klaus, Dr.
Walsumermarkstrasse 92
W-4200 Oberhausen 14(DE)**
Erfinder: **Wenning, Hans-Peter
Neuer Kamp 23
W-4285 Raesfeld(DE)**

(74) Vertreter: **Lindner, Wolfgang, Dr.
Alexander-von-Humboldt-Strasse Postfach
20 10 45
W-4650 Gelsenkirchen(DE)**

**Beschreibung**

Die Erfindung betrifft ein Verfahren zur Weiterverarbeitung von durch Schwelung von Abfallstoffen wie Kunststoffabfälle, kohlenwasserstoffbelastete Rückstände, kontaminierte Böden, Biomassen, Abschlämme gewonnenen flüssigen Produkten durch Sumpfphasenhydrierung in Gegenwart eines Katalysators oder Additivs.

Die Niedertemperatur-Pyrolyse von Hausmüll, Industrie- und Gewerbemüll sowie Sonderabfallstoffen in einem geeigneten Reaktor, z. B. einem Drehrohrofen ist bekannt (vgl. DE-C-29 47 293, EP-A-0 111 081). Als Pyrolyseprodukte entstehen je nach Betriebsparametern der Anlage und Einsatzstoffen Schwelgas, -koks, -öl bzw. -teer.

Je nach Art und Herkunft der zu schwelenden Abfallprodukte sind in den Schwelprodukten die unterschiedlichsten Schadstoffe enthalten.

Neben den sogenannten systemimmanenten Schadstoffen, die in den Abfallprodukten bereits vor der Schwelung enthalten sind, müssen die prozeßspezifischen Schadstoffe besondere beachtung finden. Unter den reduzierenden Bedingungen des Schwelprozesses entstehen neben den Hauptkomponenten Wasserstoff, Kohlenmonoxid, Kohlendioxid, Methan und Wasser Wasserstoffverbindungen wie Ammoniak, Schwefelwasserstoff, Zyanwasserstoff, Chlorwasserstoff und Fluorwasserstoff sowie unter anderem $NO_x$ und Schwefeldioxid. Diese gasförmigen Schadstoffe können durch Zugabe basischer Zuschlagstoffe, z. B. Kalk, gebunden werden und verbleiben dann überwiegend im Schwelkoks (vgl. EP-0 111 081). In Abhängigkeit von den Betriebsparametern des Schwelprozesses und den Einsatzstoffen können außerdem polyzyklische aromatische Kohlenwasserstoffe, insbesondere polychlorierte Dibenzodioxine uno polychlorierte Dibenzofurane entstehen. Beim Abkühlen der Schwelgase kondensieren diese Substanzen zusammen mit anderen gebildeten aromatischen und phenolischen Kohlenwasserstoffen aus. Um die Schweldämpfe von den enthaltenen Schadstoffen zu reinigen und um sie für die technische Weiterverwendungen nutzbar zu machen, schließen sich an die Pyrolyseverfahren zumeist ein oder mehrere Verfahrensschritte zur Aufarbeitung der Schwelprodukte an.

Ein Teil des Schwelgases wird in der Regel als Heizgas im Schwelprozeß verwandt. Dazu wird das Schwelgas zuvor in einem Gaswandler aufbereitet, derart, daß es bei ca. 1200 °C über einem glühenden Kohlebett partiell oxidiert und anschließend dissoziiert wird (vgl. DE-OS 33 17 977). Die zu Rauchgasen verbrannten Pyrolysegase, die nicht zu Heizzwecken benötigt werden, werden gereinigt und über einen Kamin freigesetzt (vgl. EP-0 111 081). In einem anderen Verfahren wird der Pyrolyse ein mittels elektrischer Widerstandsbeheizung beheizter Crackreaktor nachgeschaltet (vgl. DE-PS 29 35 669). Auch in dem Dokument DE-OS 34 12 582 wird ein der Schwelstufe nachgeschalteter Gaswandler beschrieben.

Ein anderes Verfahren zur Aufarbeitung von Schwelprodukten der Abfallpyrolyse ist die Behandlung in einer Schmelzkammer, in der die Hochtemperaturverbrennung erfolgt (vgl. DE-OS 36 05 693).

Schwelgase, die aus der Pyrolyse von Altreifen, Altkabeln oder Kunststoffen erhalten werden, werden nach DE-PS 29 17 293 einer weiteren Wärmebehandlung bei 900 K bis 1200 K in einem Rohrbündelreaktor unterzogen. In einer nachfolgenden Kondensationsstufe wird ein aromatenreiches Öl gewonnen, das als Chemie- und Mineralölrohstoff einsetzbar ist.

Je nach Art und Zusammensetzung der zu schwelenden Abfallstoffe werden an den Pyrolyseprozeß veränderte Anforderungen gestellt. Die Wirtschaftlichkeit dieser Verfahren muß stets auch im Zusammenhang mit ihrer Umweltfreundlichkeit gesehen werden. Die Minimierung der Freisetzung von Schwermetallen, sauren Gasen und polyzyklischen chlorierten Kohlenwasserstoffen erfordert einen hohen technischen Aufwand. Die Pyrolyseprodukte lassen sich insbesondere bei heterogen zusammengesetzten Abfällen zumeist nur energetisch nutzen. Die Rückgewinnung wertvoller Chemikalien kommt unter wirtschaftlichen Gesichtspunkten bisher nur für bestimmte Arten von Sonderabfällen, wie z. B. Altreifen (vgl. DE-OS 24 62 495), in Frage.

Der Erfindung liegt bei einem Verfahren der eingangs angegebenen Art die Aufgabe zugrunde, gewisse Problemabfälle so aufarbeiten zu können, daß keine Umweltbelastung durch polyzyklische Kohlenwasserstoffe bzw. Chlorkohlenwasserstoffe zu besorgen ist und daß darüber hinaus ein gewisser Anteil der anfallenden Produkte als Wertprodukte einer erneuten Nutzung zugeführt werden können.

Gemäß der Erfindung wird diese Aufgabe dadurch gelöst, daß die Merkmale des Kennzeichens von Patentanspruch 1 verwirklicht sind.

Das Verfahren ist besonders geeignet, Abfallstoffe, z. B. Kunststoff- und Kabelabfälle, Biomassen, industrielle Abschlämme, z. B. Lackabschlämme aus der Automobilindustrie, oder mit Chemikalien oder Altöl kontaminierte Böden aufzuarbeiten.

Die zur Aufarbeitung anfallenden Abfallstoffe werden nach einer möglichen Erhitzung in einem Vorheizer der Schweltrommel zugeführt. Diese wird in einer bevorzugten Ausgestaltung des Verfahren indirekt

2

über die Trommelwandungen beheizt. Als Heizgas dient in der Regel Rauchgas, das durch die Verbrennung des im Schwelprozeß anfallenden Schwelgases erzeugt wird.

Dem Einsatz können bereits basische Zusätze, beispielsweise Kalk, zugesetzt werden, um während der Schwelung gebildete saure Gase zu binden. Die Menge und die Art der gebildeten bzw. freigesetzten sauren Gase richtet sich nach der Art der Einsatzstoffe. Unter anderem können $SO_2$, $NO_x$ sowie HCl bei der Aufarbeitung chlorhaltiger Abfälle entstehen.

Nach der Teilkondensation der aus der Schweltrommel abgeführten Schweldämpfe fallen eine Schwelöl- bzw. Schwelteer- sowie eine nicht kondensierbare Schwelgasfraktion an. Die während des Schwelprozesses gebildeten polyzyklischen aromatischen Kohlenwasserstoffe und Asphaltene sowie die sich in Gegenwart von Chlor bildenden polychlorierten Aromaten sind im Kondensat enthalten.

Der Schwelkoks wird direkt aus der Schweltrommel abgezogen. Er ist weitgehend frei von organischem Material und nicht auslaugbar mit Wasser.

Das erhaltene Schwelöl bzw. der Schwelteer wird nach Wärmetausch mit dem nach Ausschleusung der rückstandshaltigen Fraktion erhaltenen Abstrom aus der Sumpfphasenhydrierung in den Sumpfphasenreaktor eingespeist.

Die Sumpfphasenhydrierung erfolgt bei einem Druck von 20 bar bis 325 bar, einer Temperatur von 250 °C bis 500 °C und einem Gas-Öl-Verhältnis von 100 $Nm^3$/t bis 3000 $Nm^3$/t.

Der bei der Pyrolyse anfallende Schwelkoks wird in einer bevorzugten Fahrweise in Mengen von 0,5 Gew.-% bis 5 Gew.-% als Einwegadditiv in der Sumpfphasenhydrierung eingesetzt. Der Schwelkoks ist hierfür besonders geeignet. Das kohlenstoffhaltige oberflächenreiche Material, das bei der Pyrolyse von Abfallstoffen anfällt, ist sofern die aufzuarbeitenden Abfälle Schwermetalle enthalten, bereits mit diesen beladen oder könnte, falls notwendig, mit Schwermetallösungen getränkt werden, um seine katalytische Wirksamkeit zu erhöhen.

Das den Sumpfphasenreaktor verlassende Produkt wird in an sich bekannter Weise über einen bei Reaktionsdruck und bei einer um vorzugsweise 20 °C bis 50 °C gegenüber der Reaktionstemperatur erniedrigten Temperatur betriebenen Heißabscheider geleitet. Hier werden die nichtkondensierten Kohlenwasserstoffe über Kopf und die rückstandshaltigen Sumpfprodukte am Boden abgezogen. Destillierbare Schwerölbestandteile können in einem nachgeschalteten Stripper abgetrennt und durch Vereinigung mit dem Kopfprodukt des Heißabscheiders der weiteren Aufarbeitung zugeführt werden. Der hinter dem Stripper verbleibende Rückstand kann zur erneuten Pyrolyse in die Schweltrommel zurückgeführt werden.

An die vorbeschriebene Sumpfphasenhydrierung kann eine Gasphasenhydrierung zur Weiterverarbeitung der nichtkondensierten Reaktionsprodukte, die am Kopf des Heißabscheiders abgezogen worden sind, ohne Wiederaufheizung oder Druckentspannung direkt angekoppelt werden.

Als Hydriergas wird wasserstoffhaltiges Prozeßgas und/oder Frischwasserstoff eingesetzt. Der Gasphasenkatalysator ist beispielsweise ein handelsüblicher Raffinationskontakt.

Die Produktströme werden nach Durchlaufen der Gasphasenhydrierung durch intensiven Wärmeaustausch kondensiert und in einem Hochdruckkaltabscheider in eine flüssige Phase und eine Gasphase aufgetrennt. Ein Teil des gasförmig verbleibenden Anteils wird als Kreislaufgas in die Sumpfphasenhydrierung zurückgeführt. Das Raffinat wird destillativ weiter aufgetrennt. Das Abwasser wird über eine Entspannungsvorrichtung ausgeschleust. Es ist frei von polyzyklischen aromatischen Kohlenwasserstoffen.

Unter den Bedingungen einer Druckhydrierung bei Temperaturen zwischen 250 °C und 500 °C werden auch die sonst thermisch relativ stabilen polyzyklischen z. T. chlorierten aromatischen Kohlenwasserstoffe in gesättigte Kohlenwasserstoffe umgewandelt.

Durch das erfindungsgemäße Verfahren bietet sich eine Möglichkeit, Problemabfälle aufzuarbeiten und darüber hinaus Wertprodukte zurückzugewinnen.

Das Verfahren gemäß der vorliegenden Erfindung wird anhand nachfolgender Beispiele näher erläutert.

1. Ein mit Rohöl kontaminierter Boden aus einem Raffinerietanklager, der 12 Gew.-% organisches Material enthält, wird in einer indirekt beheizten Drehtrommel bei einer Temperatur von 550 °C pyrolysiert. Nach einer Verweilzeit von ca. 1 h in der Trommel wird ein fester Pyrolyserückstand gewonnen, der frei von organischem Material und nicht auslaugbar mit Wasser ist. Zusätzlich fällt neben Schwelgas (ca. 1 % bezogen auf Einsatz) auch Schwelteer in einer Menge von 10 % an, der wie folgt charakterisiert wird:

| | |
|---|---|
| Gehalt an Schwefel: | 3,2 % |
| Gehalt an Stickstoff: | 0,8 % |
| Gehalt an Ruß, Staub: | 12 % |
| Gehalt an nichtsiedenden Bestandteilen | 45 % |

Der erhaltene Schwelteer mit einem Gehalt an polychlorierten Biphenylen (PCB) von 1000 ppm und einem Anteil von 88 % > 350 °C siedend wird bei einer Temperatur von 450 °C, einem Druck von 220 bar, einem Wasserstoff/Öl-Verhältnis von 2000 l/kg und einem spezifischen Durchsatz von 1 kg/l.h in der Sumpfphase hydriert. Als Additiv wird 1 % des fein gemahlenen Schwelkokses zugesetzt.

Zur Neutralisation der gebildeten Salzsäure wird die doppelt-stöchiometrische Menge Alkali dem Einsatzprodukt zugesetzt. Das organische gebundene Chlor wird quantitativ zu Kochsalz umgesetzt und mit dem Additiv ausgeschleust. Es ist aber auch möglich, die zuzugebende Menge Alkali als wäßrige Lösung oder zusammen mit Wasser in den Abstrom der Sumpfphasereaktion nach Passieren des sogenannten Heißabscheiders, z. B. die Zuführungsleitungen des Hochdruckkaltabscheiders, einzuspritzen. Die Bildung von Kohlenwasserstoffgasen beträgt 4 %, der Wasserstoffverbrauch 60 l/kg; 55 % des > 350 °C siedenden Anteils wird zu Naphtha und Mitteldestillat umgewandelt. Das Gesamtflüssigprodukt ist wie folgt charakterisiert:

| | |
|---|---|
| Gehalt an PCB: | <0,1 ppm (Nachweisgrenze) |
| Gehalt an Schwefel: | 0,1 % |
| Gehalt an Stickstoff: | 0,1 % |
| Gehalt an Schwermetallen: | <1 ppm (Nachweisgrenze) |

Das Prozeßwasser der Sumpfphasenhydrierung ist frei von PCB (Nachweisgrenze 0,1 ppm) und Schwermetallen (Nachweisgrenze 1 ppm).

2. Ein getrockneter Klärschlamm mit 76 % organischen Bestandteilen wird in einer indirekt beheizten Drehtrommel bei einer Temperatur von 500 °C pyrolysiert. Nach einer Verweilzeit von ca. 1 h in der Trommel fällt ein fester Pyrolyserückstand an, bestehend aus den anorganischen Bestandteilen des Klärschlammes und dem gebildeten Koks. Neben 24 Gew.-% Schwelgas fallen 22 Gew.-% Schwelteer an, der wie folgt charakterisiert werden kann:

| | |
|---|---|
| Teer + Staub | 60 % |
| Aromaten | 19 % |
| Aliphaten | 21 % |

Der Schwelteer mit einem Gehalt an Phenolen von 15 % und einem Gehalt an polyzyklischen aromatischen Kohlenwasserstoffen (PAK) von 10 % wird in der Sumpfphase bei einem Druck von 280 bar, einer Temperatur von 470 °C, einem Wasserstoff/Öl-Verhältnis von 2000 l/kg und einem spezifischen Durchsatz von 1 kg/l.h in der Sumpfphase hydriert.

Als Additiv wird 1 % des fein gemahlenen Schwelkokses zugesetzt. Die Heißabscheiderkopfdämpfe und die Heißabscheidersumpfdestillate werden in der direkt nachgeschalteten Gasphasenhydrierung an einem handelsüblichen Raffinationskontakt unter dem Druck der Sumpfphasenhydrierung, bei einer Temperatur von 390 °C und einem spezifischen Reaktordurchsatz von 0,5 kg/kg/h weiter behandelt. Der verbleibende Hydrierrückstand der Sumpfphase wird zur erneuten Pyrolyse der Schweltrommel zugeführt.

Das Prozeßwasser nach der Gasphasenhydrierung ist phenolfrei und frei von polyzyklischen aromatischen Kohlenwasserstoffen (PAK's). Das Gesamtflüssigprodukt ist wie folgt charakterisiert:

| | |
|---|---|
| Gehalt an PAK's: | <0,1 % |
| Gehalt an Phenolen: | <10 ppm |
| Gehalt an Schwefel: | <10 ppm |
| Gehalt an Stickstoff: | <10 ppm |

Das Pyrolyseöl wird einer kombinierten Sumpf-/Gasphasenhydrierung unterworfen. Das Pyrolysegas wird direkt dem Gasphasenreaktor zugeführt.

**Patentansprüche**

1. Verfahren zur Weiterverarbeitung von durch Schwelung von Abfallstoffen wie Kunststoffabfälle, kohlenwasserstoffbelastete Rückstände, kontaminierte Böden, Biomassen, Abschlämme gewonnenen flüssigen Produkten durch Sumpfphasenhydrierung in Gegenwart eines Katalysators oder Additivs, dadurch gekennzeichnet, daß als Einwegkatalysator und/oder Einwegkatalysatorträger bzw. Additiv intern oder extern anfallender Schwelkoks oder Braunkohlenkoks, der mit katalytisch aktiven Metallen bzw. deren Salzen imprägniert sein kann, in Mengen von 0,5 Gew.-% bis 5 Gew.-% eingesetzt wird und die Druckhydrierung unter den Bedingungen einer Sumpfphasenhydrierung oder einer kombinierten Sumpf-/Gasphasenhydrierung bei Wasserstoffdrücken von 20 bar bis 325 bar, Temperaturen von 250 °C bis 500 °C und Gas-Öl-Verhältnissen von 100 Nm$^3$/t bis 3000 Nm$^3$/t erfolgt.

2. Verfahren nach Anspruch 1, dadurch gekennzeichnet, daß die Schwelung in einer Schweltrommel mit direkter oder indirekter Beheizung durchgeführt wird.

3. Verfahren nach Anspruch 1, dadurch gekennzeichnet, daß in der Schwelstufe basische Zusätze zugegeben werden.

**Claims**

1. A process for the further processing of liquid products obtained by the low-temperature carbonization of waste substances such as plastics wastes, hydrocarbon-charged residues, contaminated soils, biomass, sludges, by sums phase hydrogenation in the presence of a catalyst or additive, characterized in that the non-recyclable catalyst and/or non-recyclable additive is internally or externally deposited low-temperature carbonization coke or lignite coke, which can be impregnated with catalytically active metals or their salts and which is used in quantities of 0.5% by weight to 5% by weight, the hydrogenation being performed under pressure in the conditions of a sump phase hydrogenation or a combined sump/gaseous phase hydrogenation with hydrogen pressures of 20 bar to 325 bar at temperatures of 250°C to 500°C and with gas/oil ratios of 100 Nm$^3$/t to 3000 Nm$^3$/t.

2. A process according to claim 1, characterized in that the low-temperature carbonization is performed in a low-temperature carbonization drum with direct or indirect heating.

3. A process according to claim 1, characterized in that basic additives are added in the low-temperature carbonization stage.

**Revendications**

1. Procédé pour le traitement ultérieur de produits liquides obtenus par pyrolyse de déchets, comme des chutes de matières plastiques, des résidus chargés d'hydrocarbures, des sols, biomasses, boues contaminées, traitement consistant en hydrogénation en phase liquide en présence d'un catalyseur ou d'un additif, procédé caractérisé en ce que comme catalyseur à une voie et/ou support de catalyseur à une voie ou additif, on utilise du semi-coke ou du coke de lignite agissant intérieurement ou extérieurement, qui peut être imprégné de métaux actifs du point de vue catalytique ou de leurs sels, dans des quantités de 0,5 % en poids à 5 % en poids et en ce que l'hydrogénation sous pression dans les conditions d'une hydrogénation en phase liquide ou d'une hydrogénation combinée en phase liquide/phase gazeuse se fait à des pressions d'hydrogène de 20 bars à 325 bars, des températures de 250°C à 500°C et des rapports gaz/huile de 100 Nm$^3$/t à 3000 Nm$^3$/t.

2. Procédé selon la revendication 1, caractérisé en ce que la distillation est exécutée dans un tambour à chauffage direct ou indirect.

3. Procédé selon la revendication 1, caractérisé en ce que dans l'étape de distillation, on ajoute des additifs basiques.